# EUROPÄISCHE PATENTSCHRIFT

(11) **EP 2 849 907 B1**
(45) Veröffentlichungstag und Bekanntmachung des Hinweises auf die Patenterteilung: **19.08.2020**
(21) Anmeldenummer: 13724211.1
(22) Anmeldetag: 13.05.2013
(51) Int. Cl.: B23D 47/04, B27B 27/04, B25B 5/06

(54) **VORRICHTUNG ZUM FIXIEREN EINES MITTELS EINER BEARBEITUNGSMASCHINE ZU BEARBEITENDEN WERKSTÜCKS**
DEVICE FOR FIXING A WORKPIECE WHICH IS TO BE MACHINED BY MEANS OF A CORRESPONDING MACHINE
DISPOSITIF DE FIXATION D'UNE PIÈCE À USINER AU MOYEN D'UNE MACHINE D'USINAGE

(30) Priorität: 18.05.2012 DE 102012208310
(43) Veröffentlichungstag der Anmeldung: 25.03.2015
(73) Patentinhaber: Robert Bosch GmbH, 70442 Stuttgart (DE)
(72) Erfinder: ZIEGER, Jens, 73776 Altbach (DE)
(86) Internationale Anmeldenummer: PCT/EP2013/059790
(87) Internationale Veröffentlichungsnummer: WO 2013/171147

(56) Entgegenhaltungen:
- DE-C1- 3 820 526
- US-A1- 2012 032 382

## Beschreibung

### Stand der Technik

Die vorliegende Erfindung betrifft eine Vorrichtung zum Fixieren eines mittels einer Bearbeitungsmaschine zu bearbeitenden Werkstücks nach dem Oberbegriff des Anspruchs 1. Eine solche Vorrichtung ist der US 2012/0032382 A1 zu entnehmen.

Aus dem Stand der Technik ist eine Vielzahl von Spannvorrichtungen für Werkstücke bekannt. Werkstücke, die mit einer Bearbeitungsmaschine, wie zum Beispiel einer Sägevorrichtung, Bohrvorrichtung oder Fräsvorrichtung, bearbeitet werden sollen, können im einfachsten Fall mit Hilfe von Schraubzwingen auf einem der Bearbeitungsmaschine zugehörigen Werkstückträger in einer gewünschten Position fixiert werden. Weiterhin sind mobile Schraubstöcke mit zwei mittels eines Spindelantriebs verstellbaren Spannbacken zum Einspannen eines Werkstücks bekannt, die auf einem Werkstückträger einer Bearbeitungsmaschine befestigt werden können.

Nachteilig am Stand der Technik ist, dass entweder keine zuverlässige Lagefixierung der Werkstücke auf dem Werkstückträger der Bearbeitungsmaschine gewährleistet ist oder sich das Einspannen von Werkstücken mit unterschiedlichen Abmessungen umständlich gestaltet, da mehrere Handgriffe eines Benutzers notwendig sind.

### Offenbarung der Erfindung

Eine Aufgabe der Erfindung ist es daher, eine neue Vorrichtung bereit zu stellen, die ein schnelles Einspannen eines mittels einer Bearbeitungsmaschine zu bearbeitenden Werkstückes mit wenigen Handgriffen ermöglicht.

Dieses Problem wird gelöst durch eine Vorrichtung zum Fixieren eines mittels einer Bearbeitungsmaschine zu bearbeitenden Werkstücks gemäß dem Anspruch 1.

Die Erfindung ermöglicht somit die Bereitstellung einer einhändig durch einen Benutzer betätigbaren Vorrichtung zum schnellen und zuverlässigen Einspannen von mittels einer Bearbeitungsmaschine zu bearbeitenden Werkstücken mit unterschiedlichen Abmessungen und geometrischen Formen.

Gemäß dem Anspruch 1 weist der Spannhebel einen Lagersteg auf, der in der mindestens einen Aufnahme lösbar aufgenommen ist.

Hierdurch kann der Spannhebel im Bedarfsfall schnell und einfach aus der Aufnahme heraus genommen werden.

Erfindungsgemäß ist im Bereich der mindestens einen Aufnahme mindestens ein Rastglied zur Verrastung des Lagerstegs ausgebildet.

Hierdurch ist eine Lagersicherung des Lagerstegs in der betreffenden Aufnahme gegeben.

Gemäß einer Ausführungsform weist die mindestens eine Aufnahme einen zumindest näherungsweise U-förmigen Querschnitt mit einer radialen Öffnung auf, die im Wesentlichen parallel zu einer Schwenkachse des Spannhebels verläuft, wobei das Rastglied mindestens zwei aufeinander zuweisende Rastvorsprünge aufweist, die im Bereich der radialen Öffnung angeordnet sind.

Durch die aufeinander zuweisenden Rastvorsprünge wird ein ungewolltes Herausspringen des Lagerstegs aus einer vom Benutzer gewählten Aufnahme verhindert.

Bevorzugt weist der Spannhebel einen Handgriff auf, wobei Lagersteg und Handgriff beidseitig jeweils mit einer Längsstrebe verbunden sind.

Somit ergibt sich eine starke Hebelwirkung beim Herabdrücken des Spannhebels in Richtung der Grundfläche bzw. der Anschlagfläche der Vorrichtung. Hierdurch wird bereits bei einem geringen manuellen Krafteinsatz eines Benutzers das Werkstück mit hoher Kraft gespannt.

Gemäß einer Ausführungsform ist die Spannbacke quer zwischen den Längsstreben des Spannhebels verlaufend ausgebildet, wobei die Spannbacke eine trapezförmige Spannfläche und eine Rückfläche aufweist, deren von den Längsstreben wegweisende Enden mittels einer gerundeten Spannkante verbunden sind.

Durch die trapezförmige Ausgestaltung der Spannfläche wird die Flächenpressung verringert und damit eine Beschädigung des Werkstücks vermieden. Hierbei können die Spannfläche und/oder die Spannkante zumindest bereichsweise mit der Werkstückoberfläche in Kontakt treten, so dass sich auch Werkstücke mit einer zumindest bereichsweise stärker ein- oder zweidimensional, d.h. sphärisch gekrümmten Oberflächengeometrie zuverlässig spannen lassen.

Gemäß einer weiteren Ausführungsform ist die Spannbacke zumindest bereichsweise hohl ausgebildet, wobei ein Winkel zwischen der Spannfläche und der Rückfläche von 0° verschieden ist.

Hierdurch ergibt sich eine Gewichtsreduzierung der Vorrichtung bei einer zugleich nahezu unverminderten mechanischen Belastbarkeit, wodurch hohe Spannkräfte erzielbar sind. Darüber hinaus wird durch die nicht parallel zur Rückfläche verlaufende Spannfläche die Klemmwirkung auf ein Werkstück zusätzlich verbessert.

Gemäß einer Ausführungsform sind in dem mindestens einen Stützelement mindestens zwei parallel zueinander beabstandet verlaufende Aufnahmen vorgesehen.

Hierdurch kann die Vorrichtung schnell und einfach an Werkstücke mit unterschiedlichen Höhenabmessungen angepasst werden.

Gemäß einer Ausführungsform ist das mindestens eine Stützelement auf einer Basisplatte und/oder einem Werkstückträger der Bearbeitungsmaschine, insbesondere einer Sägevorrichtung, einer Bohrvorrichtung oder einer Fräsvorrichtung, befestigbar.

Hierdurch kann die Vorrichtung auch unabhängig von einem Werkstückträger einer beliebigen Bearbeitungsmaschine benutzt werden.

Bevorzugt ist der Spannhebel einstückig mit einem Kunststoffmaterial, insbesondere mit einem faserarmierten Kunststoffmaterial, gebildet.

Hierdurch ergibt sich zunächst ein geringes Gewicht der Vorrichtung, was zu einer guten Handhabbarkeit durch einen Benutzer, insbesondere bei mobilen Anwendungen, führt. Darüber hinaus lässt sich die Vorrichtung in großserientauglicher Weise in großen Stückzahlen kostengünstig fertigen. Ferner wird die Gefahr einer Beschädigung eines gespannten Werkstücks aufgrund der relativ geringen Oberflächenhärte von Kunststoffen vermindert.

Gemäß einer Ausführungsform sind die Spannfläche der Spannbacke und/oder die Spannkante der Spannbacke zumindest bereichsweise mit einem elastischen Material versehen.

Hierdurch wird die Lagesicherung des eingespannten Werkstücks verbessert. Gemäß einer Ausführungsform ist mindestens ein Grundkörper vorgesehen, der die mindestens eine Anschlagfläche ausbildet und an der Bearbeitungsmaschine befestigbar ist, wobei das mindestens eine Stützelement mit dem Grundkörper verbunden ist.

Dies ermöglicht somit die Bereitstellung einer Vorrichtung zum Fixieren eines mittels einer Bearbeitungsmaschine zu bearbeitenden Werkstücks, bei der der zur Anlage des Werkstücks dienende Grundkörper und das zum Einspannen des Werkstücks dienende Stützelement als separate Bauteile ausgeführt werden können.

Das mindestens eine Stützelement ist bevorzugt längsverschiebbar an dem mindestens einen Grundkörper gelagert.

Somit kann auf einfache Art und Weise eine Positionierung des Stützelements relativ zum Grundkörper ermöglicht werden, sodass ein verbessertes Einspannen des Werkstücks erreicht werden kann.

Darüber hinaus wird das eingangs genannte Problem gelöst durch eine Bearbeitungsmaschine, insbesondere Sägevorrichtung, Bohrvorrichtung oder Fräsvorrichtung, mit mindestens einer Basisplatte und/oder einem Werkstückträger. An der Basisplatte und/oder dem Werkstückträger ist eine Vorrichtung gemäß dem Anspruch 1 befestigt.

Hierdurch lassen sich auf der Basisplatte bzw. auf einem Werkstückträger der Bearbeitungsmaschine befindliche Werkstücke mit einem Handgriff durch einen Benutzer schnell und sicher zur Bearbeitung festspannen.

Die Erfindung ist anhand von in den Zeichnungen dargestellten Ausführungsbeispielen in der folgenden Beschreibung näher erläutert. Es zeigen:
Fig. 1 eine perspektivische Ansicht einer auf einer Basisplatte einer Bearbeitungsmaschine befestigten Vorrichtung zum Spannen eines zu bearbeitenden Werkstückes gemäß einer ersten Ausführungsform,
Fig. 2 eine perspektivische rückwärtige Teilansicht der Vorrichtung von Fig. 1,
Fig. 3 eine vereinfachte Querschnittdarstellung der Vorrichtung von Fig. 1 und 2, und
Fig. 4 eine perspektivische Ansicht der Bearbeitungsmaschine von Fig. 1 mit der gemäß einer zweiten Ausführungsform ausgebildeten Vorrichtung zum Spannen eines zu bearbeitenden Werkstückes.

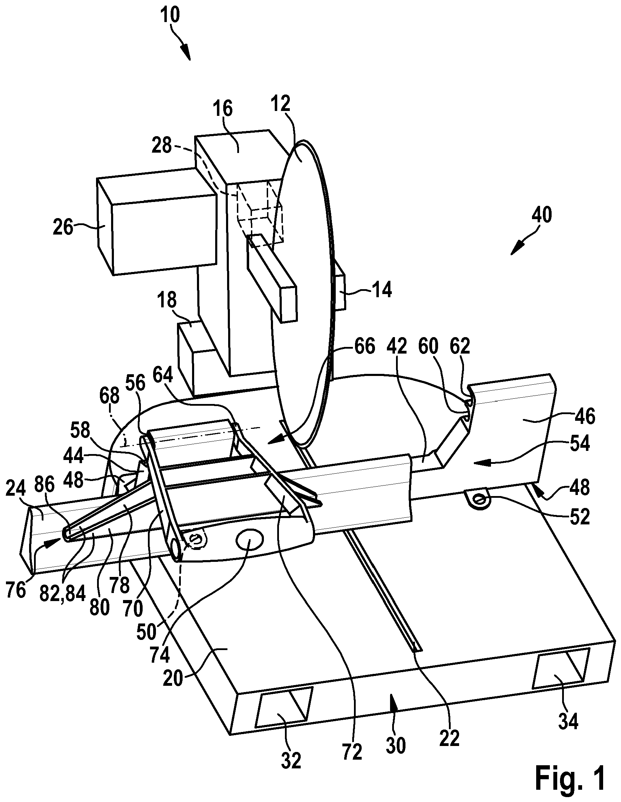

Fig. 1 zeigt eine exemplarisch in der Art einer stationären Sägevorrichtung ausgebildete Bearbeitungsmaschine 10, die beispielhaft ein scheibenförmiges Sägeblatt 12 aufweist, das in einer Gabel 14 drehbar gelagert ist. Abweichend hiervon kann die Bearbeitungsmaschine 10 auch z.B. in der Art einer Bohrvorrichtung und/oder einer Fräsvorrichtung ausgebildet sein.

Die Gabel 14 ist an einer illustrativ quaderförmigen Säule 16 angeordnet, die über einen Sockel 18 mit einer plattenförmigen Basisplatte 20 bzw. einem Werkstückträger der Bearbeitungsmaschine 10 verbunden ist. Der Sockel 18 ermöglicht das Verkippen der Säule 16 in Bezug zur Vertikalen, um das Sägeblatt 12 für einen Sägeschnitt in Richtung der Basisplatte 20 absenken zu können. Darüber hinaus kann die Gabel 14 an der Säule 16 in axialer Richtung parallel zu deren Längsmittelachse verschiebbar ausgebildet sein.

In der Basisplatte 20 ist unterhalb des Sägeblattes 12 ein Längsschlitz 22 vorgesehen, der beim Verkippen der Säule 16 oder beim vertikalen Absenken der Gabel 14 das Sägeblatt 12 zumindest teilweise aufnimmt. Hierdurch ist es möglich, ein Werkstück 24 vollständig mittels des Sägeblattes 12 zu durchtrennen, ohne dass dieses mit der Basisplatte 20 in Berührung kommt, was zu erheblichen Beschädigungen am Sägeblatt 12 und/oder an der Basisplatte 20 führen würde. Um diesem Zweck gerecht zu werden, ist eine Breite des Schlitzes 22 zumindest geringfügig größer dimensioniert als eine Dicke des Sägeblattes 12. An der Säule 16 ist ferner vorzugsweise ein elektrischer Antriebsmotor 26 angeordnet, z.B. angeflanscht, der mittels eines Getriebes 28 das Sägeblatt 12 in Rotation versetzt.

Im Bereich einer Vorderkante 30 der Basisplatte 20 sind illustrativ zwei Ausnehmungen 32,34 mit einer z.B. rechteckigen Querschnittsgeometrie vorgesehen. In diese Ausnehmungen 32,34 kann z.B. jeweils ein Spannarm einer konventionellen Schraubzwinge eingesteckt werden, um die Bearbeitungsmaschine 10 durch Anziehen der Schraubzwingen zum Beispiel auf einer Werkbankplatte sicher zu befestigen.

Gemäß einer Ausführungsform ist an der Bearbeitungsmaschine 10 eine beispielhafte Vorrichtung 40 zum Festspannen bzw. zum Fixieren des Werkstücks 24 oder eines anderen Bauteils auf der Basisplatte 20 der Bearbeitungsmaschine 10 angeordnet. Diese umfasst beispielhaft mindestens zwei Stützelemente 44,46, die jeweils einen illustrativ quaderförmigen Grundkörper 42 aufweisen.

Der Grundkörper 42 liegt beispielhaft jeweils mit einer Auflagefläche 48 auf der Basisplatte 20 auf und ist auf dieser z.B. mit Hilfe von zwei Befestigungselementen 50,52 befestigt, wobei die Befestigungselemente 50,52 mit der Basisplatte 20 z.B. eine Schraubverbindung ausbilden. Alternativ ist eine Befestigung zum Beispiel mittels Klettverschlüssen, Bajonettverschlüssen oder starken Magneten möglich. Der Grundkörper 42 jedes Stützelements 44,46 bzw. jedes Stützelement 44,46 bildet eine ebene Anschlagfläche 54 für das zu spannende Werkstück 24 aus. Die Auflagefläche 48 sowie die Anschlagfläche 54 schließen miteinander einen rechten Winkel ein.

Im Stützelement 44 sind Aufnahmen 56,58 und im Stützelement 46 beispielhaft Aufnahmen 60,62 vorgesehen, die jeweils gleichartig ausgebildet sind und z.B. eine näherungsweise U-förmige Querschnittsgeometrie mit einer radialen zur Säule 16 hinweisenden Öffnung aufweisen. Die vier Aufnahmen 56 bis 62 sind darüber hinaus jeweils endseitig offen ausgebildet, wobei die Aufnahmen 56,58 sowie 60,62 jeweils parallel zueinander beabstandet ausgebildet sind.

In der oberen Aufnahme 56 im Stützelement 44 ist ein zylindrischer oder hohlzylindrischer Lagersteg 64 eines Spannhebels 66 verdrehbar um eine Schwenkachse 68 aufgenommen. Der Lagersteg 64 kann unter Schaffung eines Pressschlusses formschlüssig in eine der Aufnahmen 56 bis 62 rastend eingedrückt werden. Der Spannhebel 66 umfasst ferner zwei in etwa parallel zueinander verlaufende Längsstreben 70,72, zwischen denen ein Handgriff 74 für einen Benutzer sowie eine Spannbacke 76 jeweils querverlaufend ausgebildet sind. Die Spannbacke 76 umfasst eine zum Werkstück 24 weisende trapezförmige Spannfläche 78 sowie eine hiervon weggerichtete, gleichfalls trapezförmige Rückfläche 80, die an von den Längsstreben 70,72 wegweisenden Enden 82,84 durch eine gerundete Spannkante 86 verbunden sind. Der Spannhebel 66 kann wahlweise in jeweils eine der in den Stützelementen 44,46 vorgesehenen Aufnahmen 56 bis 62 eingedrückt und eingerastet werden, so dass die Vorrichtung 40 leicht und schnell an Werkstücke mit unterschiedlichen Geometrien, insbesondere Höhen- und Längenabmessungen, anpassbar ist.

Durch das Herabdrücken des Spannhebels 66 in Richtung des Werkstücks 24 bzw. in Richtung der Basisplatte 20 wird das Werkstück 24 mittels der Spannbacke 76 fest zwischen dieser Spannbacke 76 und der Anschlagfläche 54 und/oder dieser Spannbacke 76 und der Basisplatte 20 für einen Bearbeitungsvorgang mit der Bearbeitungsmaschine 10 eingespannt bzw. in seiner Lage fixiert. Aufgrund der Länge der Längsstreben 70,72 ergeben sich bereits bei einer geringen Betätigungskraft durch einen Benutzer sehr hohe Spannkräfte, wobei es erforderlich ist, dass der Benutzer den Spannhebel 66 während des gesamten Bearbeitungsvorgangs dauerhaft und fest niedergedrückt hält. Der Handgriff 74 ist vorzugsweise so ausgebildet, dass eine bequeme einhändige Betätigung durch den Benutzer möglich ist.

Es wird darauf hingewiesen, dass die Stützelemente 44,46 lediglich beispielhaft mit den Befestigungselementen 50,52 auf der Basisplatte 20 bzw. dem Werkstückträger der Bearbeitungsmaschine 10 befestigt sind und nicht zur Einschränkung der Erfindung. Vielmehr kann die Vorrichtung 40 einen ihr zugeordneten, separaten eigenen Werkstückträger aufweisen, an dem bzw. an den die Stützelemente 44,46 befestigt bzw. angeformt sind, wobei dieser Werkstückträger der Vorrichtung 40 an der Basisplatte 20 und/oder dem Werkstückträger der Bearbeitungsmaschine 10 befestigbar ist. Somit kann die Vorrichtung 40 auch unabhängig von der Bearbeitungsmaschine 10 zum Spannen von Werkstücken verwendet werden. Alternativ hierzu ist es möglich, die Bearbeitungsmaschine 10 bereits herstellungsseitig mit der Vorrichtung 40 auszustatten.

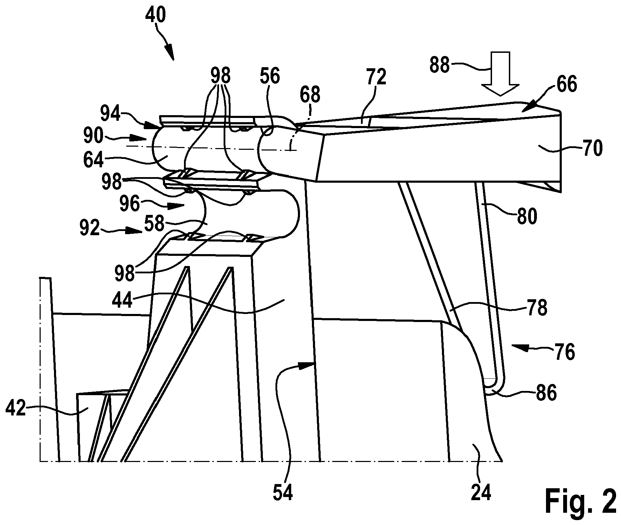

Fig. 2 zeigt das Stützelement 44 der Vorrichtung 40 von Fig. 1 mit der Aufnahme 56, in der illustrativ der Spannhebel 66 mittels des Lagerstegs 64 um die Schwenkachse 68 verschwenkbar aufgenommen ist. Das Werkstück 24 liegt an der Anschlagfläche 54 des Grundkörpers 42 des Stützelements 44 an und wird durch das Niederdrücken des Spannhebels 66 in Richtung des Werkstücks 24, wie mit einem Pfeil 88 angedeutet, durch die Spannkante 86 sowie die Spannfläche 78 der Spannbacke 76 in der gezeigten Lage festgespannt. Die lediglich der mechanischen Stabilisierung der Spannbacke 76 dienende Rückfläche 80 ist hierbei vom Werkstück 24 weggerichtet.

Die in Fig. 2 gezeigten Aufnahmen 56,58 des Stützelements 44 mit einer U-förmigen Querschnittsgeometrie verfügen jeweils über eine radiale Öffnung 90,92, die von der Anlagefläche 54 weggerichtet ist und die jeweils parallel zu der Schwenkachse 68 verläuft, um ein rückseitiges Eindrücken des Lagersteges 64 des Spannhebels 66 in eine der Aufnahmen 56,58 durch den Benutzer zu ermöglichen. Um den zwischen beiden Längsstreben 70,72 ausgebildeten Lagersteg 64 vorzugsweise rastend unter Schaffung eines Form- und Pressschlusses in eine der Aufnahmen 56,58 eindrücken zu können, sind diese jeweils mit einem Rastglied 94,96 versehen.

Jedes Rastglied 94,96 umfasst im Bereich der Öffnungen 90,92 hier exemplarisch vier Rastvorsprünge 98, wobei jeweils zwei Rastvorsprünge 98 gegenüberliegend im Bereich jeweils einer Öffnung 90,92 ausgebildet sind. Eine größere Anzahl von Rastvorsprüngen 98 mit einer größeren Breite kann gleichfalls vorgesehen sein, um insbesondere die Gefahr eines ungewollten Herausspringens des Lagerstegs 64 aus den Aufnahmen, insbesondere bei hohen Spannkräften, weiter zu verringern. Alternativ können auch jeweils zwei durchgehende Rastleisten in jeder Öffnung 90,92 vorgesehen sein, die parallel zur Schwenkachse 68 verlaufen und die wiederum gegenüberliegend ausgebildet sind. Eine Länge dieser Rastleisten entspricht hierbei bevorzugt einer Gesamtbreite der Aufnahmen 56,58 in axialer Richtung der Schwenkachse 68, um eine besonders effektive Verrastung und Lagesicherung zwischen Lagersteg 64 und Aufnahmen 56,58 zu erreichen. Alternativ können sich die Rastleisten auch nur bereichsweise über die Gesamtbreite der Aufnahmen 56,58 hinweg erstrecken.

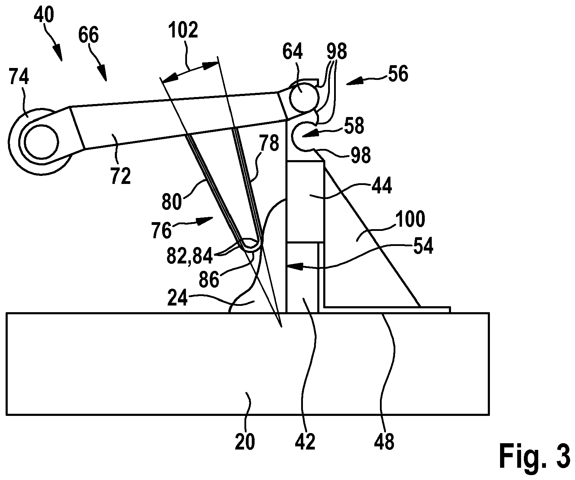

Der Aufbau der beiden Aufnahmen (60,62 in Fig. 1) des anderen Stützelements (46 in Fig. 1) korrespondiert mit dem konstruktiven Aufbau der hier beschriebenen Aufnahmen 56,58, wobei an dieser Stelle darauf hingewiesen sei, dass auch mehr als zwei Stützelemente mit mehr als jeweils zwei Aufnahmen an den Stützelementen 44 (und 46 in Fig. 1) der Vorrichtung 40 ausgebildet sein können. Zur Erhöhung der mechanischen Stabilität der Vorrichtung 40 ist an den Stützelementen 44,46 bevorzugt jeweils mindestens eine optionale dreieckförmige Versteifungsrippe (100 in Fig. 3) angeordnet.

Fig. 3 zeigt das auf der Basisplatte 20 der Bearbeitungsmaschine 10 von Fig. 1 aufliegende Werkstück 24, das mittels der am Spannhebel 66 ausgebildeten Spannbacke 76 gegen die Anschlagfläche 54 des mit mindestens einer optionalen dreieckförmigen Versteifungsrippe 100 versehenen Stützelements 44 der Vorrichtung 40 von Fig. 1 und 2 gedrückt und hierdurch in der gezeigten Lage festgespannt bzw. fixiert wird. Das Stützelement 44 bzw. dessen Grundkörper 42 liegt mit seiner Auflagefläche 48 auf der Basisplatte 20 auf.

Der Spannhebel 66 und der Grundkörper 42 des Stützelements 44 bzw. das Stützelement 44 (und 46 in Fig. 1) sind bevorzugt jeweils einstückig mit einem gegebenenfalls faserarmierten Kunststoffmaterial, zum Beispiel im Wege des bekannten Spritzgießverfahrens, hergestellt. Alternativ können auch faserverstärkte duroplastische Kunststoffe zum Einsatz kommen. Der zylindrische Lagersteg 64 des Spannhebels 66 ist wie bei Fig. 2 beschrieben in der Aufnahme 56 aufgenommen, wobei die Rastvorsprünge 98 das Herausrutschen des Lagerstegs 64 aus der Aufnahme 56 durch Formschluss verhindern. Wird der Spannhebel 66 in die unterhalb der oberen Aufnahme 56 vorgesehene untere Aufnahme 58 eingesetzt, lassen sich mittels der Vorrichtung 40 auch Werkstücke mit einer kleineren Höhe schnell und zuverlässig spannen. Der an der Längsstrebe 72 des Spannhebels 66 vorgesehene Handgriff 74 ist aus Gründen der Gewichts- und Materialersparnis bevorzugt hohlzylindrisch ausgeführt, kann alternativ aber auch massiv ausgeführt sein. Um die Spannwirkung weiter zu erhöhen und ein Abgleiten der Spannkante 86 und/oder der Spannfläche 78 vom Werkstück 24 zu vermeiden, können insbesondere die Spannkante 86 und/oder die Spannfläche 78 zumindest bereichsweise mit einem elastischen Material, wie zum Beispiel einem thermoplastischen Elastomer (s.g. "TPE"), versehen sein. Das TPE kann zum Beispiel im Wege der Koextrusion bei der Fertigung der Vorrichtung 40 zeitgleich und damit kostensparend mit verarbeitet werden.

Gemäß einer Ausführungsform besteht zwischen der Spannfläche 78 und der Rückfläche 80 der Spannbacke 76 ein Winkel 102 ungleich 0° und illustrativ von ungefähr 15°. Hierdurch lassen sich Werkstücke, wie zum Beispiel das Werkstück 24, mit einer zumindest abschnittsweise stärker positiv oder negativ gekrümmten Querschnittsgeometrie, schnell und zuverlässig mittels der Vorrichtung 40 festspannen, da die gerundete Spannkante 86 und/oder die Spannfläche 78 der Spannbacke 76 mit dem Werkstück 24 in Kontakt treten. Im Bereich der Enden 82,84 der Spannfläche 78 bzw. der Rückfläche 80 gehen diese nahtlos in die gerundete Spannkante 86 über. Aus Gründen der Gewichtseinsparung ist die mit Spannfläche 78, Rückfläche 80 sowie Spannkante 86 aufgebaute Spannbacke 76 gleichfalls bevorzugt zumindest bereichsweise hohl ausgestaltet und gegebenenfalls mit Versteifungsrippen verstärkt.

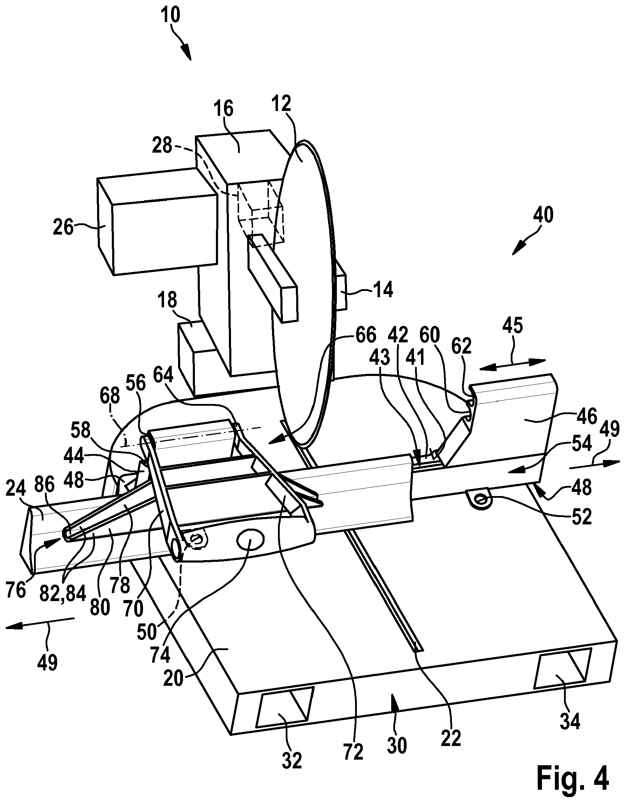

Fig. 4 zeigt die Bearbeitungsmaschine 10 von Fig. 1 mit der gemäß einer alternativen Ausführungsform ausgebildeten Vorrichtung 40 zum Festspannen bzw. zum Fixieren des Werkstücks 24 oder eines anderen Bauteils auf der Basisplatte 20 der Bearbeitungsmaschine 10. Hierbei ist mindestens eines der beiden Stützelemente 44,46 als separates Bauteil in Bezug auf den jeweils zugeordneten Grundkörper 42 ausgebildet.

Illustrativ sind das Stützelement 46 und der Grundkörper 42 als separate Bauteile ausgeführt, wobei insbesondere der Grundkörper 42 die Anschlagfläche 54 zum Anlegen des Werkstücks 24 ausbildet. Es wird jedoch darauf hingewiesen, dass auch das Stützelement 44 und der Grundkörper 42 als separate Bauteile ausgebildet sein können.

Illustrativ weist der Grundkörper 42 zumindest an seiner dem Stützelement 46 zugewandten Seite 41 ein Führungselement 43 auf, an dem das Stützelement 46 in Richtung eines Pfeils 45 längsverschiebbar gelagert ist. Das Führungselement 43 ist illustrativ nach Art einer Führungsnut bzw. einem Führungskanal ausgebildet, in die bzw. den z.B. ein am Stützelement 46 vorgesehener Führungsdorn eingreift, um eine geeignete Längsverschiebbarkeit zu ermöglichen.

Es wird darauf hingewiesen, dass sowohl in der hier gezeigten Ausführungsform, als auch in der in Fig. 1 gezeigten Ausführungsform, der Grundkörper 42 zumindest im Wesentlichen mit der Basisplatte 20 abschließt. Um ein verbessertes Anlegen bzw. Abstützen des Werkstücks 24 am Grundkörper 42 zu ermöglichen, kann dieser jedoch auch über die Basisplatte 20 hinausgehend verlängert werden, wie mit Pfeilen 49 angedeutet.

## Patentansprüche

1. Vorrichtung (40) zum Fixieren eines mittels einer Bearbeitungsmaschine (10) zu bearbeitenden Werkstücks (24), wobei die Vorrichtung mindestens ein eine Anschlagfläche (54) ausbildendes und an der Bearbeitungsmaschine (10) befestigbares Stützelement (44,46) mit mindestens einer Aufnahme (56-62) aufweist, in der ein mit einer Spannbacke (76) versehener Spannhebel (66) verschwenkbar aufgenommen ist, **dadurch gekennzeichnet, dass** der Spannhebel (66) einen Lagersteg (64) aufweist, der in der mindestens einen Aufnahme (56-62) lösbar aufgenommen ist, wobei im Bereich der mindestens einen Aufnahme (56-62) mindestens ein Rastglied (94,96) zur Verrastung des Lagerstegs (64) ausgebildet ist, und wobei der Spannhebel (66) während eines gesamten Bearbeitungsvorgangs von einem Benutzer der Vorrichtung (40) dauerhaft und fest niederzudrücken ist, um ein zumindest abschnittsweises Einspannen des gegen die Anschlagfläche (54) angelegten Werkstücks (24) zwischen Spannbacke (76) und Anschlagfläche (54) durch ein Verschwenken des Spannhebels (66) in Richtung des Werkstücks (24) zu ermöglichen.

2. Vorrichtung nach Anspruch 1, **dadurch gekennzeichnet, dass** die mindestens eine Aufnahme (56-62) einen zumindest näherungsweise U-förmigen Querschnitt mit einer radialen Öffnung (90,92) aufweist, die im Wesentlichen parallel zu einer Schwenkachse (68) des Spannhebels (66) verläuft, wobei das Rastglied (94,96) mindestens zwei aufeinander zuweisende Rastvorsprünge (98) aufweist, die im Bereich der radialen Öffnung (90,92) angeordnet sind.

3. Vorrichtung nach Anspruch 1 oder 2, **dadurch gekennzeichnet, dass** der Spannhebel (66) einen Handgriff (74) aufweist, wobei Lagersteg (64) und Handgriff (74) beidseitig jeweils mit einer Längsstrebe (70,72) verbunden sind.

4. Vorrichtung nach Anspruch 3, **dadurch gekennzeichnet, dass** die Spannbacke (76) quer zwischen den Längsstreben (70,72) des Spannhebels (66) verlaufend ausgebildet ist, wobei die Spannbacke (76) eine trapezförmige Spannfläche (78) und eine Rückfläche (80) aufweist, deren von den Längsstreben (70,72) wegweisende Enden (82,84) mittels einer gerundeten Spannkante (86) verbunden sind.

5. Vorrichtung nach Anspruch 4, **dadurch gekennzeichnet, dass** die Spannbacke (76) zumindest bereichsweise hohl ausgebildet ist, wobei ein Winkel (102) zwischen der Spannfläche (78) und der Rückfläche (80) von 0° verschieden ist.

6. Vorrichtung nach einem der Ansprüche 1 bis 5, **dadurch gekennzeichnet, dass** in dem mindestens einen Stützelement (44,46) mindestens zwei parallel zueinander beabstandet verlaufende Aufnahmen (56-62) vorgesehen sind.

7. Vorrichtung nach einem der vorhergehenden Ansprüche, **dadurch gekennzeichnet, dass** das mindestens eine Stützelement (44,46) auf einer Basisplatte (20) und/oder einem Werkstückträger der Bearbeitungsmaschine (10), insbesondere einer Sägevorrichtung, einer Bohrvorrichtung oder einer Fräsvorrichtung, befestigbar ist, um ein zumindest abschnittsweises Einspannen des Werkstücks (24) zwischen der Spannbacke (76) und der Basisplatte (20) und/oder dem Werkstückträger der Bearbeitungsmaschine (10) durch ein Verschwenken des Spannhebels (66) in Richtung des Werkstücks (24) zu ermöglichen.

8. Vorrichtung nach Anspruch 7, **dadurch gekennzeichnet, dass** der Spannhebel (66) einstückig mit einem Kunststoffmaterial, insbesondere mit einem faserarmierten Kunststoffmaterial, gebildet ist.

9. Vorrichtung nach einem der Ansprüche 4 bis 8, **dadurch gekennzeichnet, dass** die Spannfläche (78) der Spannbacke (76) und/oder die Spannkante (86) der Spannbacke (76) zumindest bereichsweise mit einem elastischen Material versehen sind.

10. Vorrichtung nach einem der vorhergehenden Ansprüche, **dadurch gekennzeichnet, dass** mindestens ein Grundkörper (42) vorgesehen ist, der die mindestens eine Anschlagfläche (54) ausbildet und an der Bearbeitungsmaschine (10) befestigbar ist, wobei das mindestens eine Stützelement (44,46) mit dem Grundkörper (42) verbunden ist.

11. Vorrichtung nach Anspruch 10, **dadurch gekennzeichnet, dass** das mindestens eine Stützelement (44,46) längsverschiebbar an dem mindestens einen Grundkörper (42) gelagert ist.

12. Bearbeitungsmaschine (10), insbesondere Sägevorrichtung, Bohrvorrichtung oder Fräsvorrichtung, mit mindestens einer Basisplatte (20) und/oder einem Werkstückträger, **dadurch gekennzeichnet, dass** an der Basisplatte (20) und/oder dem Werkstückträger eine Vorrichtung (40) gemäß einem der Ansprüche 1 bis 11 befestigt ist.

## Claims

1. Device (40) for fixing a workpiece (24) to the machine by means of a machine tool (10), wherein the device has at least one supporting element (44, 46), which forms a stop surface (54) and can be fastened to the machine tool (10), with at least one receptacle (56-62) in which a clamping lever (66) provided with a clamping jaw (76) is pivotably received, **characterized in that** the clamping lever (66) has a bearing web (64) which is releasably received in the at least on receptacle (56-62), wherein at least one latching member (94, 96) for latching the bearing web (64) is formed in the region of the at least one receptacle (56-62), and wherein, during an entire machine operation, the clamping lever (66) is to be pressed permanently and firmly down by a user of the device (40) in order to allow at least partial chucking of the workpiece (24), which is pressed against the stop surface (54), between the clamping jaw (76) and stop surface (54) via a pivoting movement of the clamping lever (66) in the direction of the workpiece (24).

2. Device according to Claim 1, **characterized in that** the at least one receptacle (56-62) has an at least approximately U-shaped cross section with a radial opening (90, 92) which extends substantially parallel to a pivot axis (68) of the clamping lever (66), wherein the latching member (94, 96) has at least two mutually facing latching projections (98) which are arranged in the region of the radial opening (90, 92).

3. Device according to Claim 1 or 2, **characterized in that** the clamping lever (66) has a handle (74), wherein the bearing web (64) and handle (74) are each connected on both sides to a longitudinal strut (70, 72).

4. Device according to Claim 3, **characterized in that** the clamping jaw (76) is designed to extend transversely between the longitudinal struts (70, 72) of the clamping lever (66), wherein the clamping jaw (76) has a trapezoidal clamping surface (78) and a rear surface (80) whose ends (82, 84), which point away from the longitudinal struts (70, 72), are connected by means of a rounded clamping edge (86) .

5. Device according to Claim 4, **characterized in that** the clamping jaw (76) is of hollow design at least in certain regions, wherein an angle (102) between the clamping surface (78) and the rear surface (80) is different from 0°.

6. Device according to one of Claims 1 to 5, **characterized in that** at least two receptacles (56-62) which extend parallel to one another at a distance apart are provided in the at least one supporting element (44, 46).

7. Device according to one of the preceding claims, **characterized in that** the at least one supporting element (44, 46) can be fastened to a base plate (20) and/or to a workpiece carrier of the machine tool (10), in particular a sawing device, a drilling device or a milling device, in order to allow at least partial chucking of the workpiece (24) between the clamping jaw (76) and the base plate (20) and/or the workpiece carrier of the machine tool (10) by a pivoting movement of the clamping lever (66) in the direction of the workpiece (24).

8. Device according to Claim 7, **characterized in that** the clamping lever (66) is formed in one piece with a plastics material, in particular with a fibre-reinforced plastics material.

9. Device according to one of Claims 4 to 8, **characterized in that** the clamping surface (78) of the clamping jaw (76) and/or the clamping edge (86) of the clamping jaw (76) are provided, at least in certain regions, with an elastic material.

10. Device according to one of the preceding claims, **characterized in that** at least one base body (42) is provided which forms the at least one stop surface (54) and can be fastened to the machine tool (10), wherein the at least one supporting element (44, 46) is connected to the base body (42) .

11. Device according to Claim 10, **characterized in that** the at least one supporting element (44, 46) is mounted so as to be longitudinally displaceable on the at least one base body (42).

12. Machine tool (10), in particular a sawing device, drilling device or milling device, having at least one base plate (20) and/or a workpiece carrier, **characterized in that** a device (40) according to one of Claims 1 to 11 is fastened to the base plate (20) and/or the workpiece carrier.

## Revendications

1. Dispositif (40) permettant de fixer une pièce (24) à usiner au moyen d'une machine d'usinage (10), le dispositif comprenant au moins un élément de support (44, 46) formant une surface de butée (54), pouvant être fixé à la machine d'usinage (10) et doté d'au moins un logement (56-62) dans lequel est reçu un levier de serrage (66) doté d'une mâchoire de serrage (76), **caractérisé en ce que** le levier de serrage (66) comprend une nervure de palier (64) qui est reçue de manière amovible dans l'au moins un logement (56-62), au moins un organe d'encliquetage (94, 96) servant à l'encliquetage de la nervure de palier (64) étant formé dans la région de l'au moins un logement (56-62), et le levier de serrage (66) devant être abaissé de manière durable et ferme par un utilisateur du dispositif (40) pendant toute une opération d'usinage, afin de permettre un serrage, au moins dans certaines parties, de la pièce (24) appliquée contre la surface de butée (54) entre la mâchoire de serrage (76) et la surface de butée (54) par un pivotement du levier de serrage (66) en direction de la pièce (24).

2. Dispositif selon la revendication 1, **caractérisé en ce que** l'au moins un logement (56-62) présente une section transversale au moins approximativement en forme de U présentant une ouverture radiale (90, 92) qui s'étend sensiblement parallèlement à un axe de pivotement (68) du levier de serrage (66), l'organe d'encliquetage (94, 96) comprenant au moins deux saillies d'encliquetage (98) tournées les unes vers les autres, lesquelles sont disposées dans la région de l'ouverture radiale (90, 92).

3. Dispositif selon la revendication 1 ou 2, **caractérisé en ce que** le levier de serrage (66) comprend une poignée (74), la nervure de palier (64) et la poignée (74) étant reliées des deux côtés respectivement à une barre longitudinale (70, 72).

4. Dispositif selon la revendication 3, **caractérisé en ce que** la mâchoire de serrage (76) est formée de manière à s'étendre transversalement entre les barres longitudinales (70, 72) du levier de serrage (66), la mâchoire de serrage (76) comprenant une surface de serrage trapézoïdale (78) et une surface arrière (80) dont les extrémités (82, 84) détournées des barres longitudinales (70, 72) sont reliées au moyen d'une arête de serrage arrondie (86).

5. Dispositif selon la revendication 4, **caractérisé en ce que** la mâchoire de serrage (76) est formée de manière creuse au moins dans certaines régions, un angle (102) entre la surface de serrage (78) et la surface arrière (80) étant différent de 0°.

6. Dispositif selon l'une des revendications 1 à 5, **caractérisé en ce qu'**au moins deux logements (56-62) s'étendant parallèlement de manière espacée les uns des autres sont prévus dans l'au moins un élément de support (44, 46).

7. Dispositif selon l'une des revendications précédentes, **caractérisé en ce que** l'au moins un élément de support (44, 46) peut être fixé sur une plaque de base (20) et/ou un porte-pièce de la machine d'usinage (10), en particulier d'un dispositif de sciage, d'un dispositif de perçage ou d'un dispositif de fraisage, afin de permettre un serrage, au moins dans certaines parties, de la pièce (24) entre la mâchoire de serrage (76) et la plaque de base (20) et/ou le porte-pièce de la machine d'usinage (10) par un pivotement du levier de serrage (66) en direction de la pièce (24).

8. Dispositif selon la revendication 7, **caractérisé en ce que** le levier de serrage (66) est formé d'une seule pièce avec une matière synthétique, en particulier avec une matière synthétique renforcée par des fibres.

9. Dispositif selon l'une des revendications 4 à 8, **caractérisé en ce que** la surface de serrage (78) de la mâchoire de serrage (76) et/ou l'arête de serrage (86) de la mâchoire de serrage (76) sont dotées, au moins dans certaines régions, d'une matière élastique.

10. Dispositif selon l'une des revendications précédentes, **caractérisé en ce qu'**au moins un corps de base (42) est prévu, lequel forme l'au moins une surface de butée (54) et peut être fixé à la machine d'usinage (10), l'au moins un élément de support (44, 46) étant relié au corps de base (42).

11. Dispositif selon la revendication 10, **caractérisé en ce que** l'au moins un élément de support (44, 46) est monté de manière déplaçable longitudinalement sur l'au moins un corps de base (42).

12. Machine d'usinage (10), en particulier dispositif de sciage, dispositif de perçage ou dispositif de fraisage, comprenant au moins une plaque de base (20) et/ou un porte-pièce, **caractérisée en ce qu'**un dispositif (40) selon l'une des revendications 1 à 11 est fixé à la plaque de base (20) et/ou au porte-pièce.
